Europäisches Patentamt

European Patent Office

Office européen des brevets

(19)

(11) Veröffentlichungsnummer: **0 111 165
B1**

(12) **EUROPÄISCHE PATENTSCHRIFT**

(45) Veröffentlichungstag der Patentschrift:
23.04.86

(21) Anmeldenummer: 83111168.7

(22) Anmeldetag: 09.11.83

(51) Int. Cl.⁴: **B 60 N 1/00**

(54) **Sitzgestell mit Hangausgleich für Fahrzeuge, insbesondere Ackerschlepper.**

(30) Priorität: 15.11.82 US 441357

(43) Veröffentlichungstag der Anmeldung:
20.06.84 Patentblatt 84/25

(45) Bekanntmachung des Hinweises auf die Patenterteilung:
23.04.86 Patentblatt 86/17

(84) Benannte Vertragsstaaten:
AT DE FR GB IT SE

(56) Entgegenhaltungen:
FR - A - 2 307 672
US - A - 937 922
US - A - 1 039 004
US - A - 3 466 089
US - A - 3 632 076

(73) Patentinhaber: DEERE & COMPANY, 1 John Deere
Road, Moline Illinois 61265 (US)

(72) Erfinder: Sandvik, Leonard Elmer, 1106 West 3rd, Cedar
Falls Iowa 50613 (US)

(74) Vertreter: Feldmann, Bernhard et al, DEERE &
COMPANY European Office, Patent Department
Steubenstrasse 36-42 Postfach 503,
D-6800 Mannheim 1 (DE)

## Beschreibung

Die Erfindung bezieht sich auf ein Sitzgestell mit Hangausgleich für Fahrzeuge, insbesondere Akkerschlepper, das einen fahrzeugfesten Gestellteil mit einem quer zur Fahrzeuglängsachse verlaufenden, kreisbogenförmig ausgebildeten, als Führung dienenden Schienenteil aufweist, der einen sitzfesten Gestellteil mit einer kreisbogenförmig ausgebildeten Nut verschiebbar aufnimmt.

Arbeitsfahrzeuge, wie Ackerschlepper, werden häufig ausserhalb der öffentlichen Verkehrswege an Hängen oder in hügeligem Gelände eingesetzt. Hier können die Fahrersitze mit einem sogenannten Hangausgleich ausgerüstet sein, der in der Regel ein derart verstellbares Sitzgestell aufweist, dass der Fahrer nach entsprechender Verstellung eine waagrechte Sitzposition einnehmen kann.

Bei einem bekannten Sitzgestell (US-A-3632076) ist in dem fahrzeugfesten Sitzgestell, also dem Teil, der auf die Fahrerplattform aufgeschraubt ist, eine in Form eines Schlitzes kreisbogenförmig verlaufende Führung eingearbeitet, in der das mit dem Fahrersitz fest verbundene Sitzgestell über Rollen geführt ist. Abgesehen davon, dass dies eine technisch aufwendige und kompliziert herzustellende Ausführungsart ist, besteht infolge der Rollenführung eine geringe Reibung, so dass zusätzliche Dämpfungsmittel in Form eines doppelseitig beaufschlagbaren Zylinders vorgesehen sind, über die verhindert werden soll, dass bei seitlicher Schräglage des Fahrzeuges der Sitz sich nicht mit zu grosser Geschwindigkeit verschiebt, wodurch Unfallgefahren entstehen könnten. Hinzu kommt, dass durch die Rollenauflage bzw. die Punktberührung grosse Belastungen auch in den Rollenlagerungen auftreten, so dass besondere Massnahmen gegen vorzeitigen Verschleiss zu ergreifen sind. Ist der Fahrersitz nicht durch eine Fahrzeugkabine geschützt, dann sind die Rollenlagerungen zusätzlich starken Verschmutzungen ausgesetzt.

Andere Sitzgestelle mit Hangausgleich sind ebenfalls bekannt (US-A-3466089, 1039004, 937922). Sie zeigen im Prinzip einen sich in Fahrtrichtung erstreckenden Lagerzapfen, auf dem der Sitz schwenkbar ist, und Feststelleinrichtungen, über die das sitzfeste Sitzgestell in verschiedenen Positionen festgestellt werden kann. Allen diesen Feststelleinrichtungen ist aber gemeinsam, dass sie unbequem zu bedienen und teilweise auch zu sperrig sind, wodurch der im Bereich des Fahrers bei derartigen Fahrzeugen sowieso knapp bemessene Raum noch stärker eingegrenzt wird. Hinzu kommt zumindest nach längerem Einsatz infolge auftretenden Lagerspiels eine unerwünschte Geräuschentwicklung.

Bei dem Sitzgestell (FR-A-2307672), von dem die Erfindung ausgeht, sind der Schienenteil und die Nut im Querschnitt T-förmig ausgebildet und gleiten im Einsatz aufeinander. Hierdurch ergeben sich bereits grosse Auflage- und Gleitflächen, wobei die Gleitflächen nach längerer Einsatzzeit und insbesondere durch Einwirkung von Witterungseinflüssen ihre Wirkung verlieren können.

Die mit der Erfindung zu lösende Aufgabe wird daher darin gesehen, die Gleitführung eines derartigen Sitzgestelles auch nach längerer Einsatzzeit noch in einem befriedigenden Zustand zu halten. Diese Aufgabe ist gemäss der Erfindung dadurch gelöst worden, dass zwischen der Nut und dem Schienenteil Lagerelemente vorgesehen sind. Auf diese Weise ist das Sitzgestell allen im Einsatz auftretenden Erfordernissen angepasst.

Eine konstruktiv in jeder Weise zufriedenstellende Ausführung wird erfindungsgemäss dadurch erreicht, dass auf dem Querbalken des im Querschnitt T-förmig ausgebildeten Schienenteils plastisches Bandmaterial als Lagerelement vorgesehen ist, das durch Endplatten gehalten wird.

Erfindungsgemäss können Anschläge zum Begrenzen der Schiebebewegung des sitzfesten Gestellteils vorgesehen sein, und zum Feststellen des sitzfesten Gestellteils kann der sitzfeste Gestellteil mit einer Rasteröffnungen aufweisenden Schiene versehen sein, wobei in die Rasteröffnungen ein fahrzeugseitig schwenkbar angeordneter Hebel unter der Wirkung einer Feder einrastbar ist. Hierbei sind die Anschläge vorteilhaft an den Enden der Schiene vorgesehen, und der Schwenkbereich des Hebels ist einerseits durch die Rasteröffnungen und andererseits durch einen fahrzeugseitig fest angeordneten Anschlag begrenzt.

Was die Gleitführung im einzelnen anbelangt, so kann der sitzfeste Gestellteil aus beiderseits des Schienenteils miteinander verbindbaren Teilstükken bestehen, die Aussparungen aufweisen, die im miteinander verbundenen Zustand der Teilstücke die den Schienenteil umgreifende, im Querschnitt T-förmige Nut ergeben.

Zur einfachen und bequemen Bedienung der Feststelleinrichtung wird nach der Erfindung vorgeschlagen, dass der Hebel über eine an einer Armlehne des Sitzes vorgesehene Betätigungseinrichtung verschwenkbar ist. ·

In der Zeichnung ist ein nachfolgend näher erläutertes Ausführungsbeispiel der Erfindung dargestellt. Es zeigen:

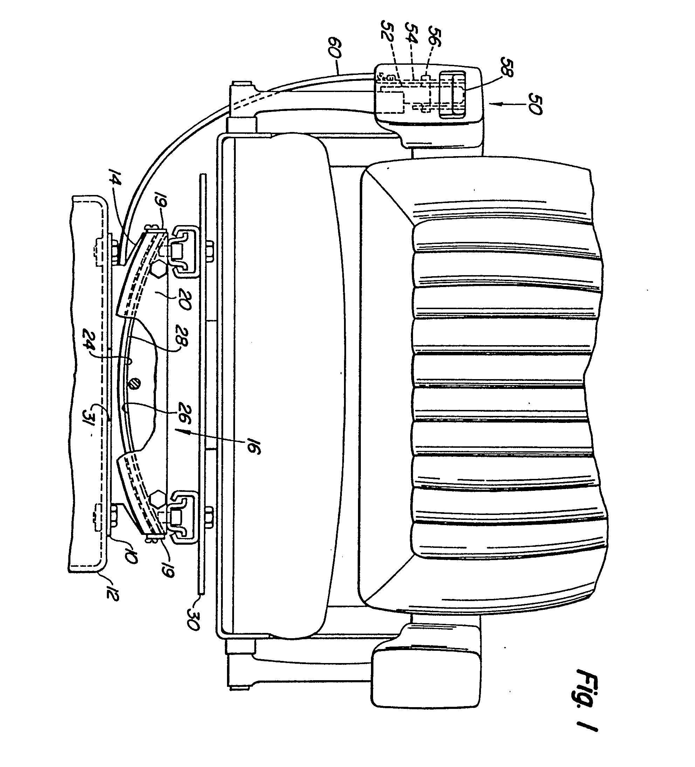

Fig. 1 ein erfindungsgemässes Sitzgestell in Vorderansicht;

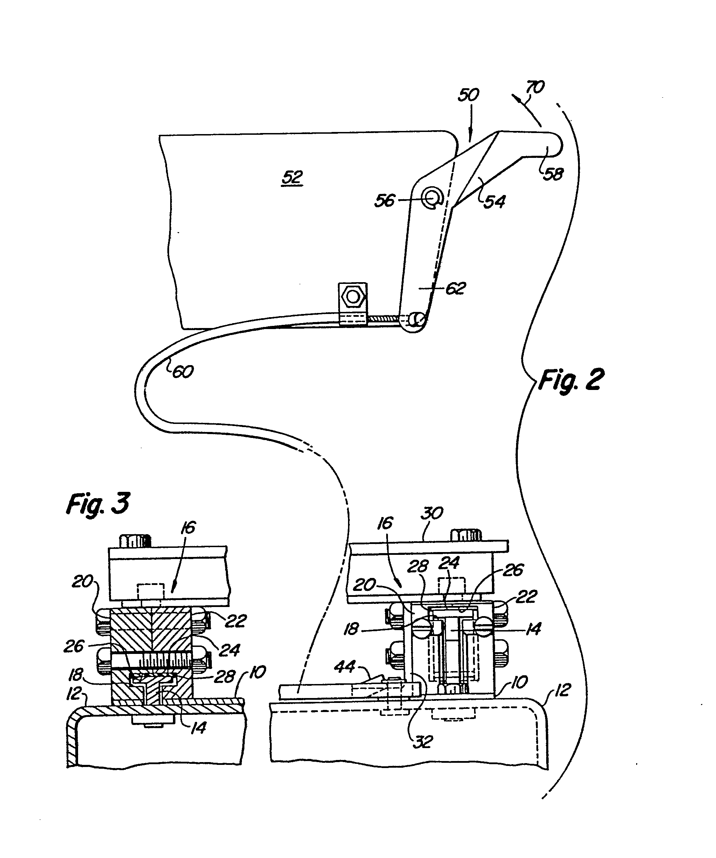

Fig. 2 das Sitzgestell in Seitenansicht;

Fig. 3 einen Schnitt durch das rückwärtige Sitzgestell, und

Fig. 4 das vordere und rückwärtige Sitzgestell mit Feststelleinrichtung in perspektivischer Darstellung.

Das erfindungsgemässe Sitzgestell ist auf ein Podest 10 aufgeschraubt, das seinerseits mit einem Fahrzeugrahmen 12 verbunden ist. Es besteht im einzelnen aus einem unteren Gestellteil, der zwei mit gegenseitigem Abstand angeordnete, sich quer zur Fahrtrichtung erstreckende, längliche und kreisbogenförmig ausgebildete Schienenteile 14 mit T-förmigem Querschnitt aufweist, die auf das Podest an dessen vorderem und rückwärtigem Ende aufgeschraubt sind.

Auf dem unteren Gestellteil ist ein mit dem Sitz verbundener Gestellteil 16 quer zur Fahrtrichtung des Fahrzeuges verschiebbar angeordnet. Hierzu ist der Gestellteil 16 mit zwei zu den Schienteilen 14 ausgerichteten Führungsteilen versehen, die T-förmige Nuten 18 aufweisen, die die T-förmigen Profile der Schienenteile 14 umgreifen. Die Führungsteile des sitzfesten Gestellteils 16 bestehen jeweils aus zwei komplementär ausgebildeten Teilstücken 20 und 22, die an den dem Schienenteil 14 gegenüberliegenden Seiten miteinander verschraubt sind. Durch diese Ausbildung bilden die gesamten Oberflächen 24 eines jeden Schienenteils 14 und die gegenüberliegenden Oberflächen 26 im Gestellteil 16 Lagerflächen, auf denen sich die Sitzkräfte verteilen. Zwischen den Oberflächen 24 und 26 ist Bandmaterial 28, vorzugsweise aus Plastik, als Lagerschale vorgesehen. Das Bandmaterial 28 wird durch Endplatten 19 zwischen den Oberflächen 24 und 26 gehalten.

Ein Sitzträger 30 ist mit der Oberseite des sitzfesten Gestellteils 16 zur Aufnahme des Sitzes verbunden, so dass der Sitz quer zur Fahrtrichtung auf einem Kreisbogen verschiebbar ist, dessen Mittelpunkt etwa im Hüftbereich des Fahrers liegt. Damit der Gestellteil 16 nach unten hin genügend Freiraum aufweist, sind in das Podest 10 entsprechende Öffnungen 31 eingearbeitet.

Ein Ausleger 32 ist mit der Innenseite eines Teilstückes 20 des vornliegenden Führungsteils des sitzfesten Gestellteils 16 verbunden und weist eine entsprechend dem Krümmungsradius der Nut 18 kreisbogenförmig ausgebildete Rasteröffnungen aufweisende Schiene 34 auf, die an ihren Enden mit Anschlägen 36 und 38 versehen ist. In die Rasteröffnungen kann ein um einen vertikalen Zapfen 42 verschwenkbarer Hebel 40 mit einer Nase 44 eingreifen. Hierzu ist der Zapfen 42 mit dem Podest 10 verbunden, so dass der Hebel parallel zum Podest verschwenkbar angeordnet ist. Eine Feder 46, die ebenfalls einenends am Podest in verschiedenen Stellungen einrastbar angeordnet ist und anderenends mit dem Hebel in Verbindung steht, schwenkt den Hebel in die Rasteröffnungen. Die Nase 44 des Hebels 40 ist dabei derart angeordnet, dass sie auch gegen die Anschläge 36 und 38 am Ende der Rasteröffnungen zur Anlage kommen kann, wodurch der gesamte Schwenkbereich des sitzfesten Gestellteils 16 begrenzbar ist. Durch einen Anschlag 48 am Podest 10 wird die Bewegung des Hebels von den Rasteröffnungen fort begrenzt.

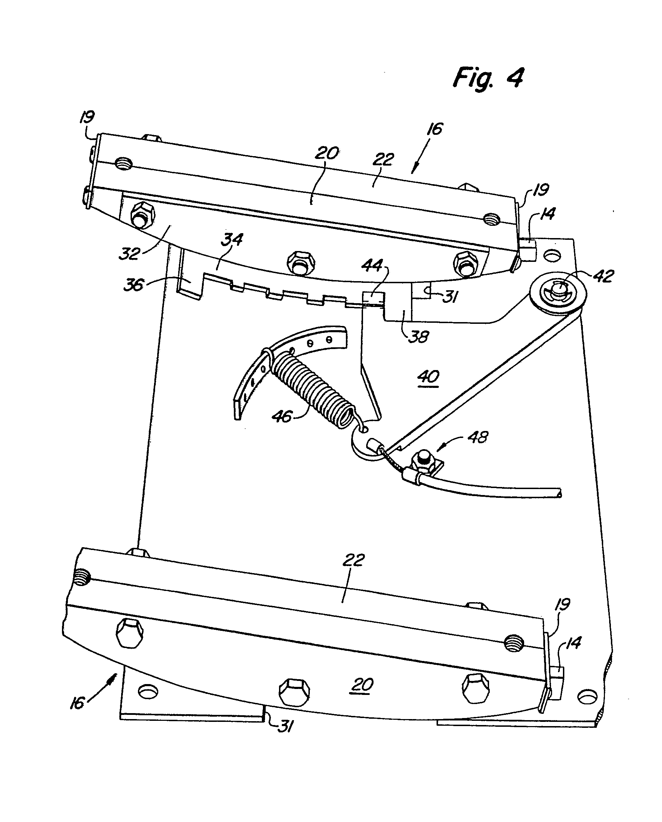

Zum Verschwenken des Hebels 40 ist eine Betätigungseinrichtung 50 an der Vorderseite einer Armlehne 52 des Sitzes vorgesehen, so dass sie von dem Fahrer äusserst leicht bedient werden kann. Sie weist einen doppelarmigen Hebel 54 auf, der um einen Zapfen 56 in der Armlehne 52 schwenken kann. Der eine Arm des Hebels 54 läuft in einen Handgriff 58 aus, während der andere Arm 62 des Hebels über einen Bowdenzug 60 od. dgl. mit dem Hebel 40 verbunden ist. Zweckmässig kann dann der Mantel des Bowdenzuges mit dem Anschlag 48 verankert sein. Bei Betätigung des Handgriffs 58 in Richtung des Pfeiles 70 wird der Hebel 40 mit Bezug auf Fig. 4 entgegen dem Uhrzeigerdrehsinn aus den Rasteröffnungen in seine Stellung am Anschlag 48 verschwenkt, wonach der Sitz bei Hangfahrten wieder in seine waagrechte Position verstellt werden kann. Sobald die Bedienungsperson den Handgriff loslässt, schwenkt der Hebel 40 unter der Wirkung der Feder 46 in eine der Rasterstellungen zurück. Die Anschläge 36 und 38 sind dabei derart ausgebildet, dass sie auch bei gegen den Anschlag 48 ausgeschwenktem Hebel 40 den Schwenkbereich des Sitzes begrenzen.

Selbstverständlich können Sitze mit dem erfindungsgemässen Sitzgestell überall dort Verwendung finden, wo der Sitz in eine für die den Sitz einnehmende Person angenehme Arbeitsposition verschwenkt werden soll, unabhängig davon, ob der Sitz nun an einem Fahrzeug vorgesehen ist oder nicht.

**Patentansprüche**

1. Sitzgestell mit Hangausgleich für Fahrzeuge, insbesondere Ackerschlepper, das einen fahrzeugfesten Gestellteil mit einer quer zur Fahrzeuglängsachse verlaufenden, kreisbogenförmig ausgebildeten, als Führung dienenden Schienenteil (14) aufweist, der einen sitzfesten Gestellteil (16) mit einer kreisbogenförmig ausgebildeten Nut (18) verschiebbar aufnimmt, dadurch gekennzeichnet, dass zwischen der Nut (18) und dem Schienenteil (14) Lagerelemente (28) vorgesehen sind.

2. Sitzgestell nach Anspruch 1, dadurch gekennzeichnet, dass auf dem Querbalken des im Querschnitt T-förmig ausgebildeten Schienenteils (14) plastisches Bandmaterial (28) als Lagerelement vorgesehen ist, das durch Endplatten (19) gehalten ist.

3. Sitzgestell nach Anspruch 2, dadurch gekennzeichnet, dass Anschläge (36, 38) zum Begrenzen der Schiebebewegung des sitzfesten Gestellteils (16) vorgesehen sind und der sitzfeste Gestellteil (16) mit einer Rasteröffnungen aufweisenden Schiene (34) versehen ist, wobei in die Rasteröffnungen ein fahrzeugseitig schwenkbar angeordneter Hebel (40) unter der Wirkung einer Feder (46) einrastbar ist.

4. Sitzgestell nach Anspruch 3, dadurch gekennzeichnet, dass die Anschläge (36, 38) an den Enden der Schiene (34) vorgesehen sind und der Schwenkbereich des Hebels (40) einerseits durch Rasteröffnungen und andererseits durch einen fahrzeugseitig fest angeordneten Anschlag (48) begrenzt ist.

5. Sitzgestell nach einem oder mehreren der vorherigen Ansprüche, dadurch gekennzeichnet, dass der sitzfeste Gestellteil (16) aus beiderseits des Schienenteils (14) miteinander verbindbaren Teilstücken (20, 22) besteht, die Aussparungen aufweisen, die im miteinander verbundenen Zustand der Teilstücke (20, 22) die den Schienenteil umgreifende, im Querschnitt T-förmige Nut (18) ergeben.

6. Sitzgestell nach einem oder mehreren der vorherigen Ansprüche, dadurch gekennzeichnet, dass der Hebel (40) über eine an einer Armlehne (52) des Sitzes vorgesehene Betätigungseinrichtung (50) verschwenkbar ist.

**Revendications**

1. Châssis de siège avec compensation de dévers pour véhicules, en particulier pour tracteurs agricoles, comportant une partie de châssis solidaire du véhicule et présentant un élément en forme de rail (14) à profil en arc de cercle, servant de guide et orienté transversalement à l'axe longitudinal du véhicule, cet élément en forme de rail recevant de manière coulissante une partie de châssis (16) solidaire du siège et munie d'une rainure (18) en arc de cercle, caractérisé en ce que des éléments de portée (28) sont prévus entre la rainure (18) et l'élément en forme de rail (14).

2. Châssis de siège suivant la revendication 1, caractérisé en ce qu'une matière en forme de bande (28) de nature plastique est prévue à titre d'élément de portée sur la branche transversale de l'élément en forme de rail (14) à section droite en forme de T, cette matière étant retenue par des plaques d'extrémité (19).

3. Châssis de siège suivant la revendication 2, caractérisé en ce que des butées (36, 38) sont prévues pour limiter le déplacement par coulissement de la partie de châssis (16) solidaire du siège et en ce que cette partie de châssis (16) solidaire du siège est munie d'un rail (34) présentant des orifices d'encrantement, un levier (40) monté de façon pivotante sur le véhicule pouvant être engagé dans les orifices d'encrantement sous l'action d'un ressort (46).

4. Châssis de siège suivant la revendication 3, caractérisé en ce que les butées (36, 38) sont prévues aux extrémités du rail (34) et en ce que l'amplitude de basculement du levier (40) est limitée, d'une part, par les orifices d'encrantement et, d'autre part, par une butée fixe (48) prévue sur le véhicule.

5. Châssis de siège suivant l'une ou plusieurs des revendications précédentes, caractérisé en ce que la partie de châssis (16) solidaire du siège est constituée par des pièces (20, 22) pouvant être reliées entre elles des deux côtés de l'élément en forme de rail (14), ces pièces présentant des évidements qui, dans la condition de réunion entre elles desdites pièces (20, 22), ménagent la rainure (18) à section droite en forme de T entourant l'élément en forme de rail.

6. Châssis de siège suivant l'une ou plusieurs des revendications précédentes, caractérisé en ce que le levier (40) peut être déplacé par pivotement par l'intermédiaire d'un dispositif d'actionnement (50) prévu sur un repose-bras (52) du siège.

**Claims**

1. A seat mounting with slope compensator for vehicles, in particular agricultural tractors, which has a mounting portion which is fixed with respect to the vehicle and which has a rail member (14), which rail member extends transversely with respect to the longitudinal axis of the vehicle and is of an arcuate configuration and serves as a guide means and displaceably receives a mounting portion (16) which is fixed with respect to the seat, with a groove (18) of arcuate configuration, characterised in that bearing elements (28) are provided between the groove (18) and the rail member (14).

2. A seat mounting according to Claim 1, characterised in that plastic strip material (28) is provided as the bearing element on the transverse beam portion of the rail member (14) which is of a T-shaped configuration in cross-section, the strip material (28) being held by end plates (19).

3. A seat mounting according to Claim 2, characterised in that stops (36, 38) are provided for restricting the sliding movement of the mounting portion (16) which is fixed with respect to the seat, and the mounting portion (16) which is fixed with respect to the seat is provided with a bar (34) having detent openings, wherein a lever (40) which is disposed pivotably on the vehicle side of the assembly can be engaged into the detent openings under the force of a spring (46).

4. A seat mounting according to Claim 3, characterised in that the stops (36, 38) are provided at the ends of the bar (34) and the range of pivotal movement of the lever (40) is restricted on the one hand by detent openings and on the other hand by a stop (48) which is fixedly disposed on the vehicle side of the assembly.

5. A seat mounting according to one or more of the preceding claims, characterised in that the mounting portion (16) which is fixed with respect to the seat comprises parts (20, 22) which can be connected together on both sides of the rail member (14) and which have recesses which, in the interconnected condition of said parts (20, 22), form the groove (18) of T-shaped cross-sectional configuration, which fits around the rail member.

6. A seat mounting according to one or more of the preceding claims, characterised in that the lever (40) is pivotable by way of an actuating means (50) provided on an armrest (52) of the seat.

Fig. 1

Fig. 2

Fig. 3

Fig. 4